# EUROPÄISCHE PATENTANMELDUNG

(11) **EP 1 559 540 A1**
(43) Veröffentlichungstag der Anmeldung: **03.08.2005**
(21) Anmeldenummer: 04029645.1
(22) Anmeldetag: 15.12.2004
(51) Int. Cl.: B32B 7/12, G09F 3/10, B41M 7/00

(54) **Transferierbares Folienmaterial**

(30) Priorität: 29.12.2003 AT 20902003
(71) Anmelder: Hueck Folien Ges.m.b.H, 4342 Baumgartenberg (AT)
(72) Erfinder: Zoister, Stefan, 4320 Perg (AT); Kastner, Friedrich, Dr., 4710 Grieskirchen (AT); Müller, Matthias, 92699 Bechtsrieth (DE)
(74) Vertreter: Landgraf, Elvira, Dipl.-Ing.

(57) **Zusammenfassung**

Die Erfindung betrifft eine transferierbares Folienmaterial, das mindestens eine releasefähige Strahlungsschutzschicht und eine Klebeschicht aufweist und zum Schutz strahlungsempfindlicher Schichten oder Beschichtungen geeignet ist.

## Beschreibung

Die Erfindung betrifft ein transferierbares Folienmaterial zum Schutz darunter liegender funktioneller und/oder dekorativer Schichten vor Strahlung, insbesondere UV- und/oder Lichtstrahlung.

Optische Sicherheitsmerkmale, insbesondere farbige Sicherheitsmerkmale weisen oft Aufdrucke aus lichtempfindlichen Farben, beispielsweise Effektfarben auf. Bei längerer Einwirkung von Strahlung, insbesondere UV-Licht oder sichtbares Licht, lässt die Intensität bzw. Leuchtkraft nach, sodass eine eindeutige Identifikation des Sicherheitsmerkmals erschwert wird.

Aufgabe der Erfindung war es ein transferierbares Folienmaterial bereitzustellen, das auf Wertdokumente, Datenträger, Verpackungen und dergleichen auf einfache Weise aufgebracht werden kann und die Sicherheitsmerkmale, z.B. die empfindlichen farbigen Aufdrucke vor Zerstörung oder Alterung durch Strahlungseinfluss beispielsweise durch UV- oder sichtbares Licht schützt.

Gegenstand der Erfindung ist daher ein transferierbares Folienmaterial, dadurch gekennzeichnet, dass das Folienmaterial mindestens eine releasefähige Strahlungsschutzschicht und eine Klebeschicht aufweist.

Als Trägersubstrate kommen beispielsweise Trägerfolien, vorzugsweise flexible transparente Kunststofffolien, beispielsweise aus Pl, PP, MOPP, PE, PPS, PEEK, PEK, PEI, PAEK, LCP, PEN, PBT, PET, PA, PC, COC, POM, ABS, PVC in Frage.
Die Trägerfolien weisen vorzugsweise eine Dicke von 5 - 700 µm, bevorzugt 5 - 200 µm, besonders bevorzugt 5 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Ferner können als Trägersubstrate Gewebe oder Vliese, wie Endlosfaservliese, Stapelfaservliese und dergleichen, die gegebenenfalls vernadelt und/oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefasern eingesetzt werden. Die eingesetzten Vliese oder Gewebe weisen ein Flächengewicht von etwa 20 g/m² bis 500 g/m² auf. Gegebenenfalls müssen die Vliese oder Gewebe oberflächenbehandelt werden.

Die releasefähige Strahlungsschutzschicht kann beispielsweise eine releasefähige Transferlackschicht sein, sie kann durch Strahlung, beispielsweise UV-Strahlung vemetzt oder vemetzbar sein und kratzfest und/oder antistatisch ausgerüstet sein. Geeignet sind sowohl sowohl lösungsmittelhaltige als auch reaktive Lacksysteme, insbesondere auch Lacksysteme auf Basis Polyester-Acrylat oder Epoxyacrylat Kolophonium-, Acrylat-, Alkyd-, Melamin-, PVA-, PVC-, Isocyanat-, Urethansysteme, die konventionell oder reaktiv härtend (chemisch oder strahlungshärtend) sein können.
Die Strahlungsschutzschicht kann zumindest semitransparent, transparent oder transluzent sein. Vorzugsweise weist die Strahlungsschutzschicht fein verteilte strahlungsabsorbierende oder -reflektierende - oder -streuende, beispielsweise UVabsorbierende Pigmente oder Pigmente, die die Strahlung diffus reflektieren, auf.
Es können in die Strahlungsschutzschicht auch fein verteilte Glasperlen eingebracht werden, dadurch ergibt sich einerseits der gewünschte Schutz gegen Strahlung durch die strahlungsstreuende Wirkung, andererseits auch ein ausgeprägter Kopierschutz.
Vorzugsweise weisen die Pigmente eine Größe von ≤ 1 µm bzw. die Glsskörner eine Größe ≤ 100 µm von auf. Beispiele für derartige Pigmente sind beispielsweise TiO₂, bekannte UV- Absorber, HALS als Radikalfänger, und dergleichen beispielsweise Tinuvin® (Ciba) und dergleichen.

Die Pigmente erscheinen im sichtbaren Licht transparent und beeinflussen daher den optischen Effekt nicht oder änderen gezielt das Erscheinungsbild der strahlungsempfindlichen Schicht, schützen aber strahlungsempfindliche Schichten vor Alterung und Zerstörung.

Diese Strahlungsschutzschicht weist vorzugsweise eine Dicke von 0,1 bis 20, vorzugsweise 0,5 bis 2 µm auf.
Die Strahlungsschutzschicht kann aber auch aus einer dünnen, vorzugsweise in einem bekannten PVD- oder CVD-Verfahren auf eine beschriebene releasefähige Transferlackschicht aufgedampften metallischen Schicht bestehen, die semitransparent oder transparent erscheint.
Beispiele für solche metallischen Schichten sind beispielsweise Al, Pb, Au, Ag, Ni, Fe, Cr und deren Legierungen, Kohlenstoff, Russ und dergleichen , die eine Dicke von 1- 20 nm, vorzugsweise ≤ 10 nm aufweisen.

Ferner kann die Strahlungsschutzschicht eine diffraktive Struktur, beispielsweise eine Beugungsstruktur, ein Hologramm, ein Oberflächenrelief oder dergleichen aufweisen. Diese optisch aktive Struktur kann ggf. partiell metallisiert sein.

Anschließend wird eine Klebeschicht, beispielsweise ein Heiß- oder Kaltsiegellack, eine Schmelzklebeschicht, ein Kaschierkleber oder eine Selbstklebebeschichtung aufgebracht, die anschließend die Verbindung zu dem zu schützenden Material bildet. Derartige Klebeschichten sind bekannt.

Zwischen Trägersubstrat und Strahlungsschutzschicht kann auch ggf. eine Transferlackschicht zur Ablösung des Schichtaufbaus vom Trägersubstrat angeordnet sein.
Die Transferlackschicht kann lumineszierende, insbesondere fluoreszierende Pigmente aufweisen und/oder diffraktive Strukturen, beispielsweise Hologramme, Beugungsgitter und dergleichen, die ggf. partiell metallisiert sein können.

Zwischen Strahlungsschutzschicht und Klebeschicht können weitere funktionelle und/oder dekorative Schichten vorhanden sein

Diese Schichten beispielsweise können bestimmte elektrische, magnetische, chemische, physikalische und auch optische oder optisch aktive Eigenschaften aufweisen.

Zur Einstellung elektrischer Eigenschaften, beispielsweise Leitfähigkeit, können beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, FTO, ATO und dergleichen zugegeben werden. Weiters können auch dotierte oder nicht dotierte Halbleiter wie beispielsweise Silicium, Germanium, Galliumarsenid, Arsen oder Ionenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder zugesetzt werden. Ebenso können intrinsisch leitfähige organische Polymere wie Polyanilin, Polyacetylen, Polyethylendioxythiophen und/oder Polystyrolsulfonat zugesetzt werden.

Zur Einstellung der magnetischen Eigenschaften können paramagnetische, diamagnetische und auch ferromagnetische Stoffe, wie Eisen, Nickel, Barium, und Cobalt oder deren Verbindungen oder Salze (beispielsweise Oxide oder Sulfide) verwendet werden. Besonders geeignet sind Fe(II)- und Fe(III)-Oxide, Barium- bzw. Cobaltferrite, seltene Erden und dergleichen.

Die optischen Eigenschaften der Schicht lassen sich durch sichtbare Farben bzw. Pigmente, lumineszierende Farbstoffe bzw. Pigmente, die im sichtbaren, im UV-Bereich oder im IR-Bereich fluoreszieren oder phosphoreszieren, wärmeempfindliche Farben bzw. Pigmente, Effektpigmente, wie Flüssigkristalle, Perlglanz-, Bronzen und/oder Multilayer-Farbumschlagspigmente beeinflussen. Diese sind in allen möglichen Kombinationen einsetzbar.

Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.
Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, beispielsweise silbrig eingestellt werden.

Ferner kann eine weitere optionale Schicht auch optisch aktive Eigenschaften aufweisen. Hier kommen beispielsweise Beugungsstrukturen, diffraktive Strukturen, Hologramme, Oberflächenreliefs und dergleichen in Frage, die ggf. partiell metallisiert sein können.
Diese Strukturen werden vorzugsweise in thermoplastische oder UV-härtende Schichten eingebracht.

Ferner kann das transferierbare Folienmaterial bereits im Schichtaufbau die strahlungsempfindliche partielle oder vollflächige Schicht aufweisen. Beispiele für solche Schichten sind beispielsweise Effektfarbschichten, Tageslichtleuchtfarben, Fluoreszenz- und Lumineszenzfarben und dergleichen.

Alle diese Schichten können durch bekannte Verfahren, beispielsweise durch Bedampfen, Sputtem, Drucken (Tief-, Flexo-, Sieb-, Digital-, Offsetdruck und dergleichen), Sprühen, Galvanisieren Walzenauftragstechniken und dergleichen aufgebracht werden.

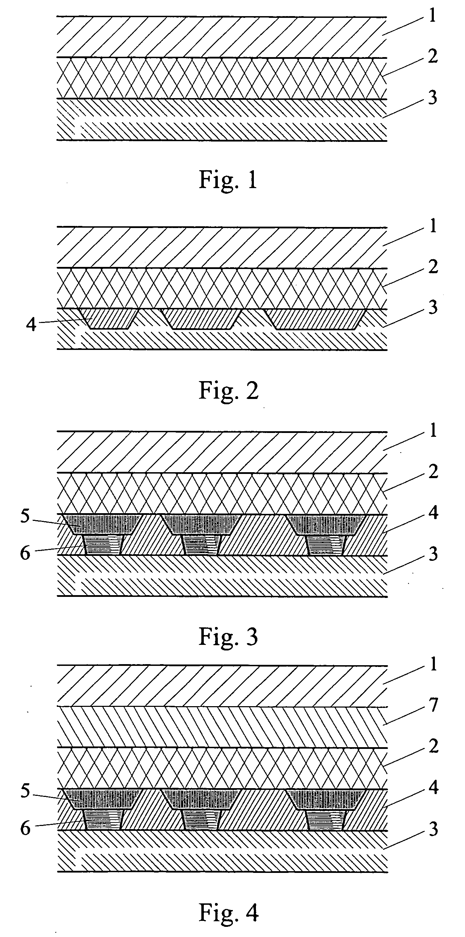

In den Fig. 1 bis 4 sind erfindungsgemäße transferierbare Folienmaterialien dargestellt. Darin bedeuten 1 das Trägersubstrat, 2 die Strahlungsschutzschicht, 3 die Klebeschicht, 4 eine strahlungsempfindliche Schicht, 5 und 6 weitere funktionelle oder dekorative Schichten, beispielsweise eine diffraktive Struktur oder eine Schicht mit elektrisch leitenden, magnetischen oder optischen Eigenschaften, und 7 eine Transferlackschicht.

Die erfindungsgemäße Transferfolie kann anschließend mittels der beschriebenen Klebeschicht auf bekannte Weise auf beliebiges Trägersubstrat aufgebracht werden, wobei auch das Trägersubstrat mit einer strahlungsempfindlichen partiellen oder vollflächigen Schicht versehen sein kann.
Dabei wird das Übertragsverfahren je nach Zusammensetzung und Eigenschaften der Klebeschicht gewählt und kann unter Temperatur- und/oder Druckeinfluss stattfinden.

Die Transferfolie kann dabei sowohl vollflächig als auch partiell nur im Bereich der strahlungsempfindlichen Beschichtung des entsprechenden Trägersubstrats aufgebracht werden. Dadurch können die strahlungsempfindlichen Schichten durch partielle Aufbringung einer schützenden Folie geschützt werden, ein aufwendiger Veredelungsprozess des gesamten Trägersubstrats ist daher nicht notwendig.

## Patentansprüche

1. Transferierbares Folienmaterial, **dadurch gekennzeichnet, dass** das Folienmaterial mindestens eine releasefähige Strahlungsschutzschicht und eine Klebeschicht aufweist.

2. Transferierbares Folienmaterial nach Anspruch 1, **dadurch gekennzeichnet, dass** die Strahlungsschutzschicht eine releasefähige Transferlackschicht auf Basis von Polyester-Acrylat oder Epoxyacrylat Kolophonium-, Acrylat-, Alkyd-, Melamin-, PVA-, PVC-, Isocyanat-, Urethansystemen, die konventionell oder reaktiv härtend sind, ist.

3. Transferierbares Folienmaterial nach Anspruch 2, **dadurch gekennzeichnet, dass** die Strahlungsschutzschicht strahlungsabsorbierende, - reflektierende oder - streuende Pigmente oder Glasperlen enthält.

4. Transferierbares Trägersubstrat nach einem der Ansprüche 1 bis 3, **dadurch gekennzeichnet, dass** die Pigmente oder Glasperlen eine Größe < 1 µm aufweisen.

5. Transferierbares Trägersubstrat nach einem der Ansprüche 1 bis 3, **dadurch gekennzeichnet, dass** Strahlungsschutzschicht eine Dicke von 0,5 bis 2 µm aufweist.

6. Transferierbares Folienmaterial nach einem der Ansprüche 1 bis 5, **dadurch gekennzeichnet, dass** die Strahlungsschutzschicht eine dünne metallische Schicht aufweist.

7. Transferierbares Folienmaterial nach einem der Ansprüche 1 bis 6, **dadurch gekennzeichnet, dass** die Strahlungsschutzschicht eine diffraktive Struktur aufweist.

8. Transferierbares Folienmaterial nach Anspruch 7, **dadurch gekennzeichnet, dass** die diffraktive Struktur partiell metallisiert ist

9. Transferierbares Folienmaterial nach einem der Ansprüche 1 bis 8 **dadurch gekennzeichnet, dass** zwischen Strahlungsschutzschicht und Klebeschicht weitere funktionelle und/oder dekorative Schichten vorhanden sind.

10. Transferierbares Folienmaterial nach Anspruch 9, **dadurch gekennzeichnet, dass** diese Schichten elektrisch leitfähige, und/oder magnetische und/oder lumineszierende und/oder optisch aktive und/oder und oder optische Merkmale aufweist.

11. Transferierbares Folienmaterial nach Anspruch 9, **dadurch gekennzeichnet, dass** zwischen Strahlungsschutzschicht und Klebschicht eine strahlungsempfindliche Schicht vorhanden ist.

12. Transferierbares Folienmaterial nach einem der Ansprüche 1 bis 11, **dadurch gekennzeichnet, dass** die Klebebeschichtung ein Heißsiegellack, eine Schmelzklebebeschichtung oder eine Selbstklebebeschichtung ist.

13. Transferierbares Folienmaterial nach einem der Ansprüche 1 bis 12, **dadurch gekennzeichnet, dass** zwischen Trägersubstrat und Strahlungsschutzschicht eine Transferlackschicht angeordnet ist.

14. Transferierbares Folienmaterial nach Anspruch 13, **dadurch gekennzeichnet, dass** die Transferlackschicht lumineszierende Pigmente und/oder diffraktive Strukturen aufweist.

15. Transferierbares Folienmaterial nach Anspruch 14, **dadurch gekennzeichnet, dass** die diffraktive Struktur eine Hologramm ist, das partiell metallisiert sein kann.

16. Verfahren zur Herstellung eines Transferierbaren Folienmaterials nach einem der Ansprüche 1 bis 15, **dadurch gekennzeichnet, dass** auf ein Trägersubstrat ggf. eine Transferlackschicht, eine Strahlungsschutzschicht und eine Klebeschicht aufgebracht werden.

17. Verfahren nach Anspruch 16, **dadurch gekennzeichnet, dass** zwischen Strahlungsschutzschicht und Klebeschicht weitere vollflächige und/oder partielle funktionelle Schichten aufgebracht werden.

18. Verwendung des transferierbaren Folienmaterials nach einem der Ansprüche 1 bis 15 zur partiellen oder vollflächigen Übertragung auf Trägersubstrate.

19. Verwendung des transferierbaren Folienmaterials nach einem der Ansprüche 1 - 15 zur partiellen oder vollflächigen Übertragung auf mit strahlungsempfindlichen Schichten partiell oder vollflächig beschichtete Trägersubstrate.
